# FASCICULE DE BREVET EUROPEEN

(11) **EP 2 997 294 B1**
(45) Date de publication et mention de la délivrance du brevet: **18.07.2018**
(21) Numéro de dépôt: 14731683.0
(22) Date de dépôt: 12.05.2014
(51) Int. Cl.: F16M 13/04

(54) **DISPOSITIF DE CAMÉRA EMBARQUÉE MINIATURE POUR LE SPORT**
MINIBORDKAMERA FÜR SPORT
MINIATURE ONBOARD CAMERA DEVICE FOR SPORT

(30) Priorité: 14.05.2013 FR 1301091
(43) Date de publication de la demande: 23.03.2016
(73) Titulaire: Piednoir, Jean-Marc, 44330 La Chapelle-Heulin (FR)
(72) Inventeur: Piednoir, Jean-Marc, 44330 La Chapelle-Heulin (FR)
(74) Mandataire: IP Trust
(86) Numéro de dépôt international: PCT/FR2014/051083
(87) Numéro de publication internationale: WO 2014/184475

(56) Documents cités:
- WO-A1-94/14349
- FR-A1- 2 793 118
- US-A1- 2003 071 961
- US-A1- 2004 008 157
- US-A1- 2006 072 007
- US-A1- 2013 004 153

## Description

La présente invention concerne un dispositif de caméra embarquée miniature permettant à son utilisateur de filmer principalement des scènes sportives tout en ayant les mains libres.

Actuellement, la prise de vue de ces images et vidéos est traditionnellement effectuée à l'aide d'une caméra de type « boitier » fixée, sanglée, ventousée ou collée sur le casque de protection. Ce type de caméra présente de nombreux risques de blessures pour leur utilisateur et pour les autres comme par exemple : le détachement de la caméra, la déviation de la trajectoire d'une chute, l'accrochage de la caméra avec un objet tiers, la création d'un impact sur le casque lors d'une chute. Face à ce danger potentiel, de nombreuses fédérations sportives et fabricants de casques interdisent l'ajout d'appendice sur les casques et tout particulièrement ce type de caméras.

De plus les systèmes actuels, tels que ceux divulgués par les documents US2004/008157, US2006/0072007, US2013/0004153, ne permettent pas de restituer véritablement le point de vue de l'utilisateur, car leur mode de fixation et leur encombrement nécessite de les positionner sur le haut ou le côté du casque. Autre point, les caméras de type boitier sont imposantes et très visibles, ce qui les rend peu esthétiques et incompatibles avec certaines activités sportives ou les tenues vestimentaires sont imposées.
Dans des domaines éloignés du sport, tels que celui de la défense, des casques de protection pour pilotes de chasse, à visière comprennent des modules incluant des moyens optroniques de projection d'une image sur la visière, leur permettant d'obtenir des informations de vol dans le même temps qu'ils visualisent leur trajectoire. Des casques de ce type sont décrits dans les documents WO94/14349 et FR 2 793 118. Ces casques présentent cependant un encombrement, une complexité et un coût démesurés qui empêchent leur utilisation dans le domaine du sport, et ne sont pas pourvus de moyens de capture d'image ou de vidéo. En outre, la rigidité de la structure tubulaire qui intègre chaque moyen optronique monoculaire, nécessaire au bon positionnement de l'image formée sur la visière, est incompatible avec une adaptation simple au front ou au casque d'un sportif. Le dispositif selon l'invention permet de remédier à ces inconvénients.

A cet effet, le dispositif de capture d'images et/ou de vidéos embarqué miniature, selon la revendication 1, comprend un module (30) renfermant un système de capture d'images et/ou de vidéos miniature et au moins un boîtier allongé doté d'au moins une aile (20, 40) accueillant des équipements de fonctionnement du système de capture d'images et/ou de vidéos, tels qu'une batterie et/ou une électronique embarquée, le module (30) et le boîtier (10) étant articulés deux à deux de façon à pouvoir adopter une configuration incurvée incluse dans un plan perpendiculaire à l'axe optique du système de capture d'image et/ou de vidéo, et/ou incluse dans un plan contenant l'axe optique du système de capture d'image et/ou de vidéo de façon à pouvoir :épouser la forme incurvée correspondante d'un accessoire porté sur la tête d'un utilisateur ou du front de l'utilisateur lui-même, pour y être fixé dans la configuration incurvée.

Selon d'autres caractéristiques intéressantes utilisées indépendamment les unes des autres ou en combinaison :
- l'aile est disposée d'un côté de l'axe optique du système optique.
- le boitier (10) est composé de deux ailes (20, 40) articulées chacune vis à vis d'un bord latéral du module (30), les deux ailes étant disposées respectivement de part et d'autre de l'axe optique du système de capture d'images et/ou de vidéos.
- l'articulation d'une aile vis à vis du module s'effectue par une portion flexible interposée entre le module et l'aile et solidarisée au module et à l'aile.
- l'articulation d'une aile vis à vis du module s'effectue par une liaison mécanique type pivot ou rotule.
- le dispositif comprend des moyens de fixation à l'accessoire ou sur le front d'un utilisateur.
- les moyens de fixation sont disposés sur sa face inférieure et/ou sur sa face supérieure et/ou sur sa face arrière, de préférence sous la forme d'une bande auto-agrippante susceptible de coopérer avec une bande auto-agrippante complémentaire de l'accessoire de l'utilisateur, et/ou un adhésif à fixer sur l'accessoire ou directement sur la peau de l'utilisateur.
- l'aile se présente sous la forme d'une coque fermée et renferme un microphone, la coque abritant le microphone des bruits parasites tels que ceux créés par le vent lorsque l'utilisateur se déplace à vitesse élevée.
- le système de capture d'images et/ou de vidéos comprend une rotule orientable permettant une rotation d'une lentille du système de capture autour d'un axe horizontal et/ou autour d'un axe vertical.
- le dispositif comprend des moyens d'immobilisation de la rotule dans une position particulière.
- le dispositif comprend un unique bouton en relief permettant de commander le système de capture assurant à la fois les fonction de marche, pause et arrêt.
- Le dispositif comprend un voyant signalant l'état allumé ou éteint du système de capture, disposé sur la face inférieure de l'aile opposée au système de capture afin d'être visible par l'utilisateur sans nécessiter qu'il ôte le dispositif, tout en ne gênant pas outre mesure son champ de vision.

L'invention concerne également un accessoire avec caméra embarquée miniature destiné à être porté sur la tête d'un utilisateur, comprenant une partie formant un bandeau susceptible d'épouser la forme arrondie de la tête de l'utilisateur. Selon l'invention, l'accessoire comprend le dispositif ci-dessus et des moyens de fixation entre le bandeau et le dispositif.

De préférence, le dispositif est fixé par sa face arrière, sur la face avant du bandeau.

Selon une caractéristique, l'accessoire comprend une visière solidaire du bandeau, le dispositif étant fixé par sa face inférieure ou par sa face supérieure respectivement sur la paroi supérieure ou sur la paroi inférieure de la visière.

Plus précisément, le dispositif précédemment défini comporte en effet selon une première caractéristique, un boitier horizontal incurvé permettant d'épouser la forme d'un casque ou du front de l'utilisateur et ainsi de pouvoir se fixer en face avant du casque, soit en applique, soit dans son épaisseur ou bien soit sur, soit sous la visière de protection. Le dispositif de caméra embarquée miniature pour le sport, caractérisé en ce qu'il comporte un boitier incurvé permettant d'épouser la forme d'un casque ou du front de l'utilisateur, composé d'au moins une aile inclinables autour d'un module renfermant la lentille de la caméra. Grâce à cette nouvelle position, le dispositif est centré et au plus proche des yeux de l'utilisateur pour obtenir des images, du son et des vidéos encore plus réalistes.

Le dispositif offre de nouvelles possibilités d'intégration et permet une utilisation de celui-ci en toute sécurité pour l'utilisateur grâce à son intégration sans débord et le respect de l'intégrité du casque de protection en cas de choc. Ainsi, le dispositif peut être intégré à l'intérieur d'un casque, dans son épaisseur, entre la vitre de protection et le front du pilote. Il est possible également de le positionner dessous ou dessus une visière de protection, celle-ci étant éjectable en cas de choc car non solidaire du casque lui-même.

Le dispositif, de par son implantation et sa conception, en fait un système de caméra embarquée discret et très peu visible de l'extérieur. Le dispositif, de part sa légèreté, peut également être fixé sur la visière d'une casquette ou sur une monture de lunette.

Selon un premier mode de réalisation :
- La forme du dispositif peut être incurvé dans le sens de la largeur et de la hauteur afin d'épouser la forme d'un casque, d'une visière de protection, d'une casquette ou du front de l'utilisateur.
- La longueur et la forme du dispositif sont étudiées pour ne pas dépasser du casque ou de la visière de protection afin d'éviter tout risque d'accrochage.
- le dispositif peut être composé d'une partie centrale avec un système d'articulation permettant d'orienter les 2 ailes fixées de part et d'autre afin d'épouser au maximum la forme du support lui servant de fixation.
- Le boitier peut comporter un rebord de mise en butée des ailes orientables.
- Le dispositif peut intégrer deux ailes, gauche et droite, plus compactes que la partie centrale afin de maintenir le champ de vision de l'utilisateur clair et dégagé.
- Les ailes sont amincies en leurs extrémités afin de pouvoir intégrer une fente permettant d'y introduire un système de fixation complémentaire comme une sangle, une pince, une pièce additionnelle boulonnée...
- Le dispositif est composé d'une forme bombée en partie supérieure et d'un fond plat sur sa partie inférieure pour permettre d'y coller un système de fixation de type bande velcro, bande aimantée ou pastille autocollante.
- De préférence, le dispositif est fixé de façon amovible à son support principalement pour des raisons de sécurité permettant un détachement rapide en cas de choc ou sur simple action de l'utilisateur. De même, ce détachement rapide facilite la lecture ou le transfert des images ou des vidéos et permet d'installer facilement cette caméra sur plusieurs supports, comme par exemple l'installer d'une casquette vers une bombe d'équitation.
- Le dispositif peut intégrer une lentille de caméra axée entre les deux yeux et au dessus afin de ne pas gêner le champs de vision tout en offrant des images les plus proches possibles de ce que voit l'utilisateur.
- La lentille de la prise de vue peut intégrer un système de rotation sur rotule pour s'incliner sur l'axe vertical ou horizontal, permettant ainsi une utilisation quelque soit l'angle ou le sens d'utilisation du boitier.

La partie centrale du dispositif intègre une coque autorisant le mouvement de rotation de la rotule avec des butées d'inclinaisons maximums. Elle dispose également d'un système de serrage qui permet d'immobiliser la lentille dans la position désirée.

D'autres caractéristiques et avantages de l'invention seront mieux compris à la lecture de la description qui va suivre d'exemples de réalisations, faites en référence aux dessins annexés sur lesquels :
La figure 1 représente une vue en perspective, d'un ensemble à caméra miniature selon l'invention.
La figure 2 représente une vue en élévation frontale de l'ensemble représenté sur la figure 1.
La figure 3 représente une vue de détail du module central représenté sur la figure 1.
La figure 4 représente le système de rotation de la lentille de la caméra selon l'invention.
Les figures 5A et 5B représentent le système d'inclinaison de la lentille de la caméra selon l'invention,
La figure 6 représente le volet coulissant ouvert telle que représenté sur la figure 1.
La figure 7 représente l'animation des ailes autour du module central tel que représenté sur la figure 1.
Les figures 8A, 8B, 9A, 9B, 10A, 10B, 11A, 11B, 12A, 12B représentent des exemples non limitatifs d'utilisation du dispositif selon l'invention.
Les figures 13 à 15 représentent une variante d'articulation des ailes du dispositif vis à vis du module central.
Les figures 16, 17, 19, 20 illustrent différents types d'accessoires auxquels le dispositif selon l'invention peut être fixé (respectivement bandeau, bombe avec toque, bride de cheval et masque de ski ou de moto).
La figure 18 représente le dispositif selon l'invention en perspective et mettant en évidence deux moyens de fixation disposés sur la face supérieure et la face arrière du dispositif.
Les figures 21 et 22 représentent l'utilisation du dispositif selon l'invention respectivement avec un élément de transmission à distance des informations recueillies, et avec un capteur solaire.

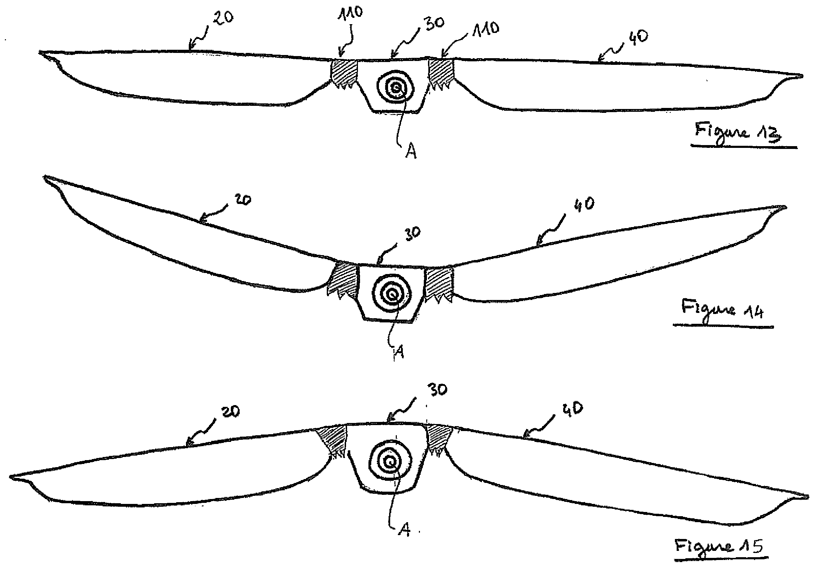

Les figures 13 à 22 représentent également des exemples non limitatifs d'utilisation du dispositif selon l'invention.

En référence à ces dessins, le dispositif comporte un boitier (10) composé de deux ailes (20 et 40) positionnées de part et d'autre du module central (30). Le dispositif est incurvé dans sa largeur, sa longueur et sur sa hauteur afin de pouvoir épouser la forme d'un casque, d'une visière de protection, d'une casquette ou le front de l'utilisateur. Le dispositif est composé de deux ailes (20 et 40) plus compactes que le module central (30) afin de dégager le plus possible l'angle de vision de l'utilisateur (1).

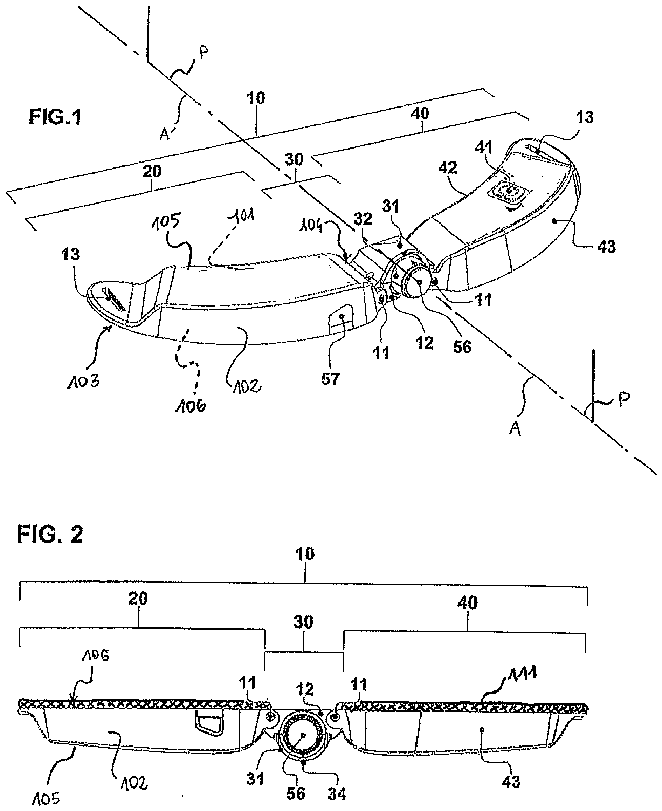

Le dispositif est, dans une position de repos représentée sur la figure 1, dans laquelle les ailes et le module central sont alignés, vu de face (figure 2), symétrique par rapport à un plan P traversant verticalement le module central 30 (il y est vu de dessous).

Le module central 30 est un petit caisson sensiblement parallélépipédique dont une face avant est ouverte pour accueillir un système de capture images et/ou vidéos miniature, dont l'objectif fera saillie de cette face avant du module. Il est pourvu d'une cavité susceptible d'accueillir une rotule intégrant une lentille du système de capture d'image et/ou de vidéo.

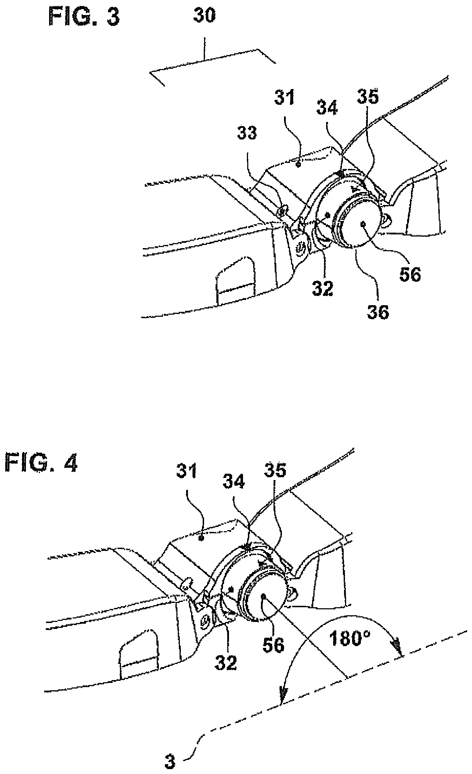

La rotule est mobile à l'intérieur de cette cavité autour d'un axe horizontal parallèle au plan de symétrie P, sur un arc de 180° (figure 4), afin de permettre la fixation du dispositif au-dessus ou en-dessous de la visière d'une casquette par exemple, sans avoir à effectuer une rotation de l'image et/ou de la vidéo lors de sa lecture.

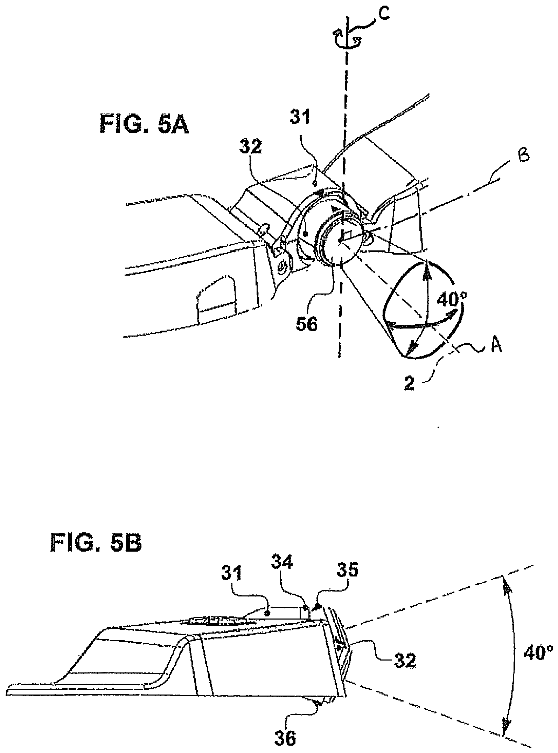

Conformément aux figures 5A et 5B, la rotule est également mobile autour d'un axe B perpendiculaire au plan de symétrie pour la régler de bas en haut, et autour d'un axe vertical C pour la régler de gauche à droite. Avec ces divers degrés de liberté, la lentille de la rotule peut voir évoluer son axe optique à l'intérieur d'un cône de 40° d'ouverture par exemple.

Elle peut être fixée dans une position particulière par différents moyens : le caisson du module peut être prévu avec une coque centrale amovible et un dispositif de serrage 33 permettant d'appliquer sur la rotule 32 un effort de serrage par l'intermédiaire de cette coque 31, ou bien être équipée sur sa face externe de picots qui viendront en prise entre deux nervures correspondantes aménagées dans la cavité interne du module, ou encore d'une roue crantée lui permettant d'adopter des positions discrètes, ces deux dernières solutions présentant l'avantage de permettre un positionnement de la rotule alors que le dispositif est porté par l'utilisateur.

Les ailes 20 et 40 étant identiques, une seule sera décrite ci-dessous, cette description étant valable pour la deuxième aile.

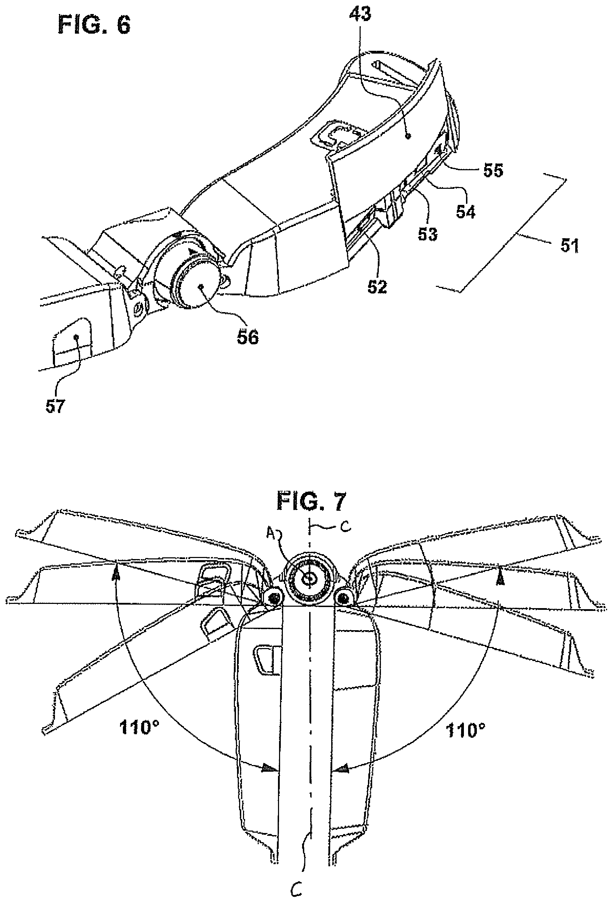

Conformément à la figure 1, chaque aile 20, 40 est formée par un pavé sensiblement parallélépipédique, recourbé en arc de cercle de façon à définir une face arrière courbe 101, destinée à suivre la courbure du front d'un utilisateur, une face avant 102 également courbe, une face supérieure 106 relativement plane telle que visible sur la figure 2, et une face inférieure 105 légèrement bombée en son centre vers l'extérieur (voir figure 2) afin de définir, à l'extrémité 104 destinée à se retrouver au plus proche du module central 30, une forme amincie augmentant la latitude de pivotement de l'aile vis à vis du module 30, qui peut parcourir conformément à la figure 7, une portion angulaire d'au moins 110°.

Cette forme bombée permet en outre, lorsque les deux ailes sont redressées au-dessus du module 30 conformément à la figure 7, de définir un contour arrondi pour le dispositif, facilitant et rendant plus agréable sa tenue en main.

Le matériau constitutif du pavé formant l'aile peut être prévu flexible pour autoriser une déformation suivant les axes X, Y et Z lui permettant d'épouser différentes formes de supports tels que des visières, casques ou fronts d'utilisateurs.

Chaque aile (20 et 40) peut réaliser un mouvement de rotation autour du module central (30) grâce à un système d'articulation (11) et limité par le rebord du caisson central (12) servant de mise en butée. Ces articulations (11) permettent aux ailes (20 et 40) du dispositif de pouvoir épouser la forme du support de fixation, comme un rebord de casque, une visière de protection ou une casquette. Conformément à la figure 7, les ailes (20 et 40) peuvent être repliées verticalement pour servir de poignée permettant ainsi de tenir le dispositif dans une seule main.

Dans l'exemple représenté sur les figures 1 à 7, l'articulation d'une aile vis à vis du bord correspondant du module central 30 s'effectue autour d'un axe de pivotement 11 parallèle au plan de symétrie du dispositif par une articulation classique (tige traversant une chape formée à l'extrémité des ailes et le bord correspondant du module interposé entre les deux branches de la chape).

Selon le mode de réalisation représenté sur les figures 13 à 15, l'articulation s'effectue au moyen d'une portion de matériau flexible 110 interposée entre chaque aile 20, 40 et le module central 30, ce qui assure une plus grande flexibilité pour le pivotement d'une aile par rapport au module central 30 qui peut se faire autour d'un axe différent de l'axe 11.

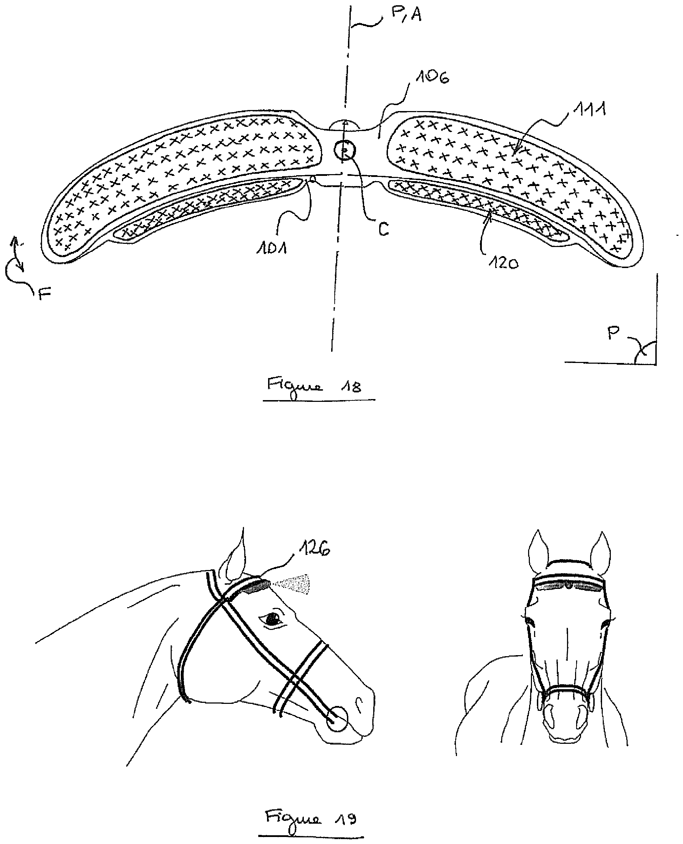

Cette articulation peut en fait être effectuée par différents moyens assurant un pivotement d'une aile par rapport au module dans les différentes directions, de façon à former un ensemble qui épouse la forme incurvée du front d'un utilisateur (le dispositif est alors incurvé autour d'un axe de courbure vertical C perpendiculaire à l'axe optique, dans les deux sens repérés par la flèche F sur la figure 18 et peut adopter ainsi différentes configurations incurvées pour s'appliquer au mieux le long du front de l'utilisateur) et/ou la forme incurvée d'une visière d'une casquette ou du rebord interne d'un casque (le dispositif est alors incurvé suivant un axe de courbure horizontal coïncidant avec l'axe optique A entre différentes configurations incurvées représentées sur les figures 13 à 15 (voir également figure 7).

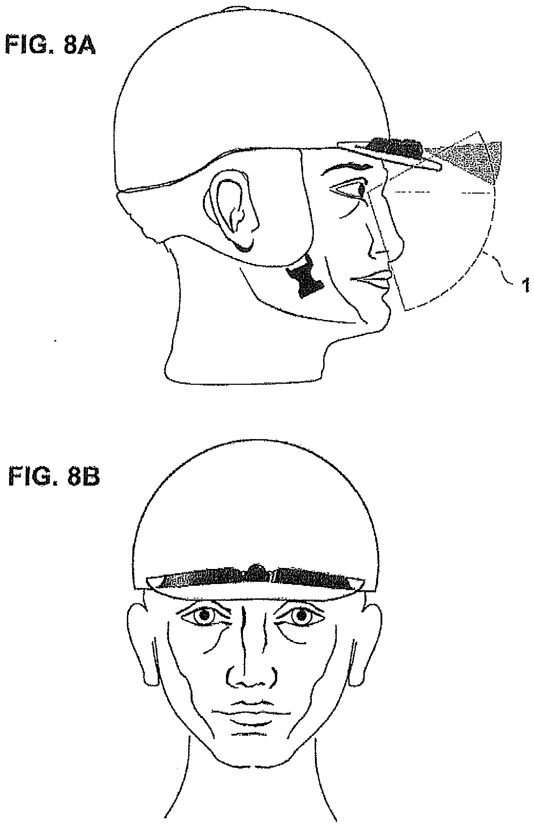

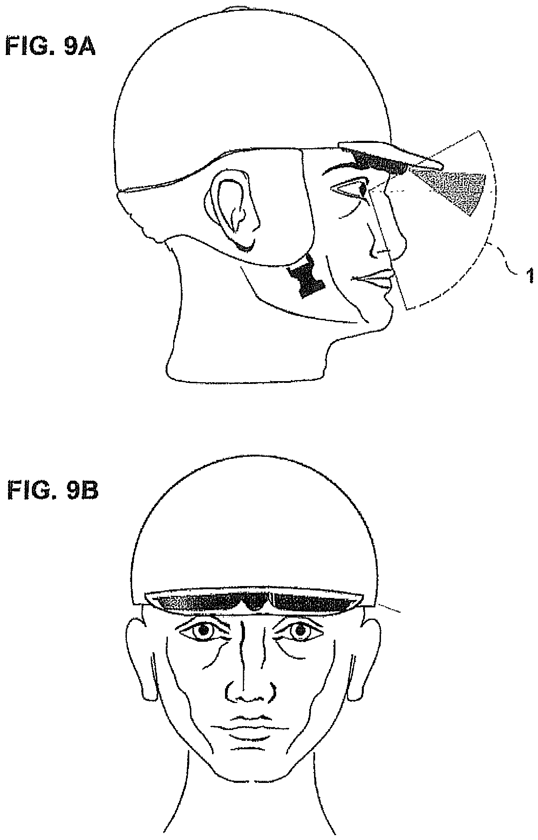

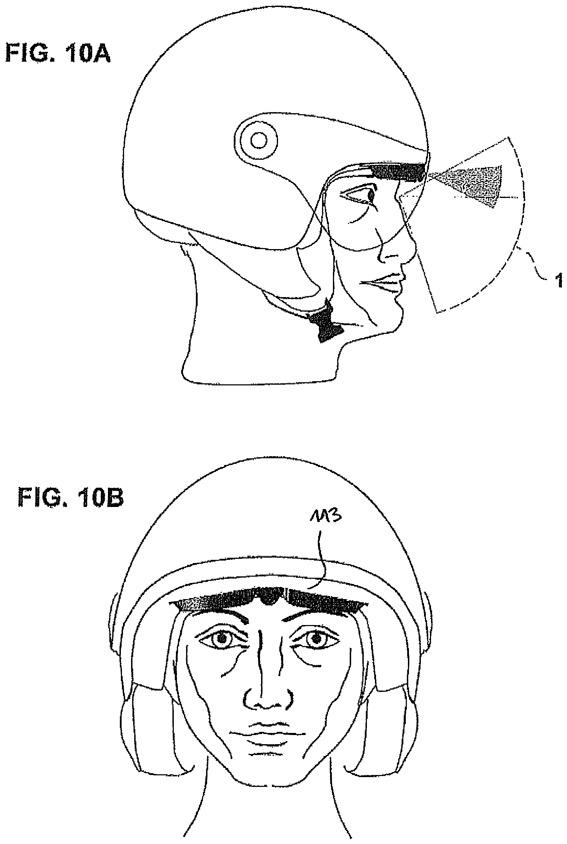

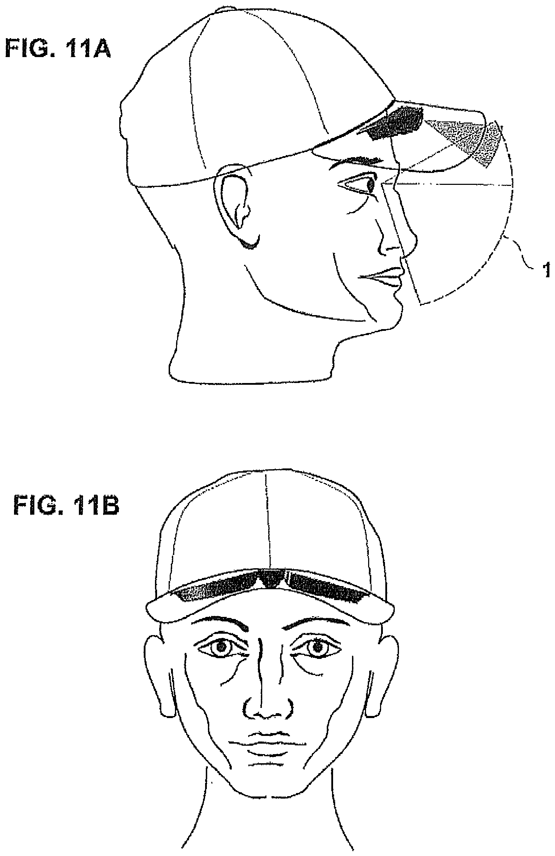

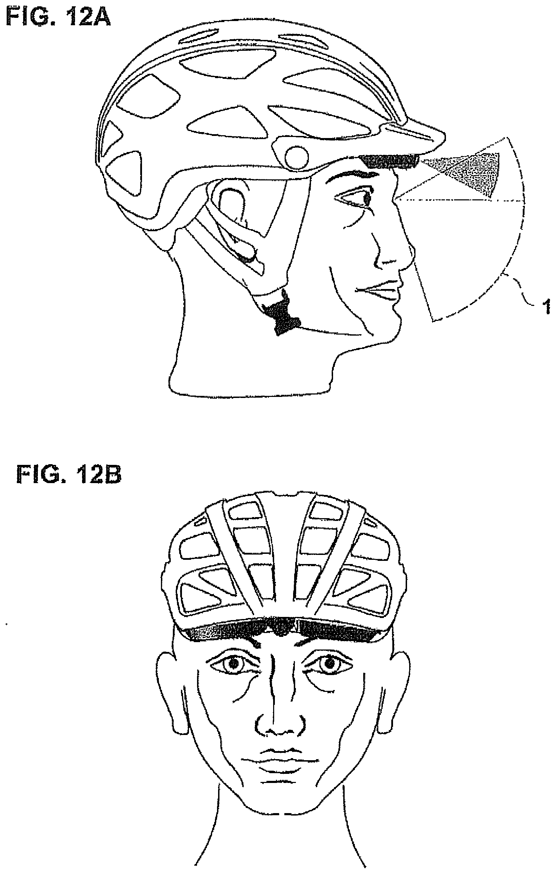

Conformément à la figure 1, le dispositif comprend des moyens de fixation 111 des ailes 20, 40 sur la face interne ou externe de la visière d'une casquette ou d'un casque (figures 8A, 9A, 11A, 12A, 17) ou sur le rebord interne 113 d'un casque (voir figure 10B).

Dans ce cas, le moyen de fixation 111 est présent sur la face supérieure 106 du dispositif.

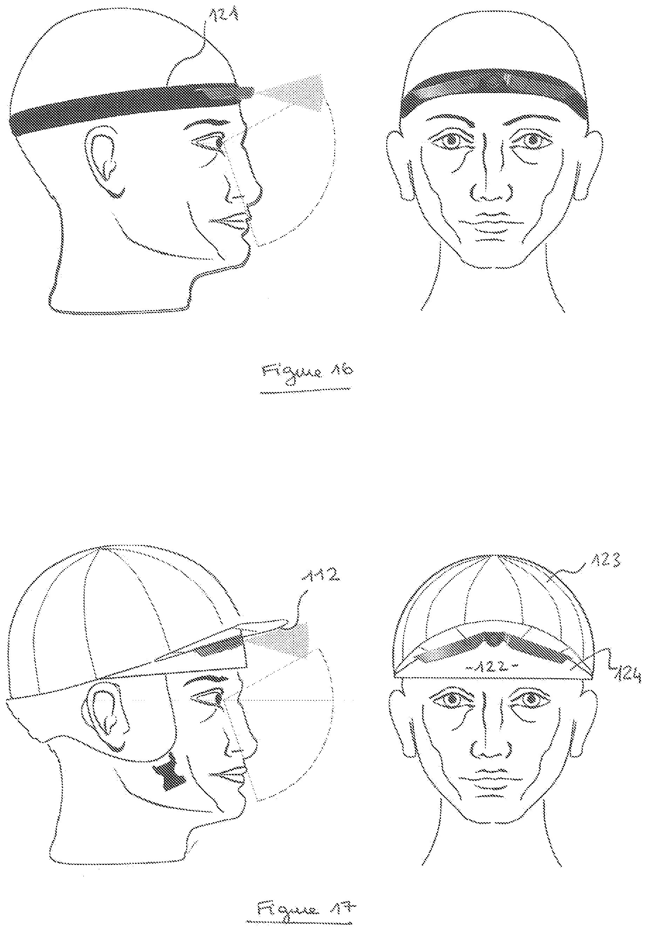

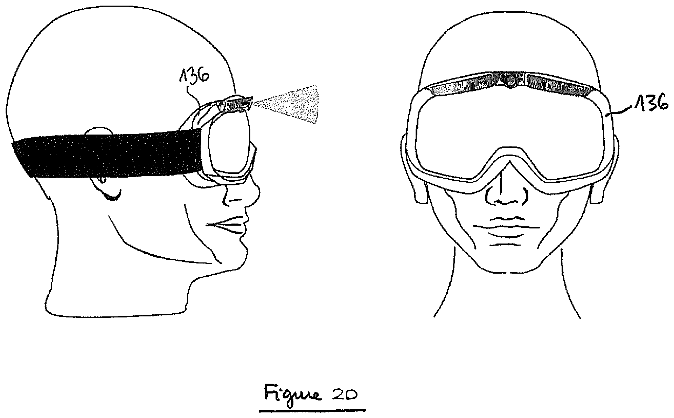

Conformément à la figure 18, le dispositif peut comprendre un moyen de fixation 120 disposé sur la face arrière 101 de chaque aile, de façon à être fixé sur la face externe d'un accessoire dépourvu de visière tel qu'un bandeau 121 (voir figure 16) ou un masque de plongée, de parachute, de ski 136 tel qu'illustré sur la figure 20, sur un bonnet porté par l'utilisateur. Ou encore, sur la surface externe de la partie bombée d'une casquette lorsque le dispositif est fixé au dessus de la visière (figure 8A, 8B), ou bien encore, directement sur la peau de l'utilisateur.

Le mode de réalisation représenté sur la figure 17, illustre un utilisateur portant une bombe d'équitation 122 coiffée d'une toque 123 formée d'un morceau de tissu en forme de bonnet surmonté d'une visière en matière cartonnée. Cette constitution particulière de la visière en matériau moins rigide que celle équipant une bombe classique, permet, lors d'une chute ou d'un incident, de réduire le risque de blessure pour l'utilisateur lors de pratiques plus extrêmes. Les deux moyens de fixation 111 et 120 fixés sur la face supérieure 106 et la face arrière 101 du dispositif, sont respectivement fixés sur la face interne 112 de la visière de la toque 123, et sur la face avant 124 de la bombe 122. La légèreté et les faibles dimensions du dispositif selon l'invention lui permettent d'être fixé sur une visière de ce type moins rigide que les visières de bombes classiques.

Ces moyens de fixation permettent de maintenir fixe la configuration incurvée des ailes et du module.

Ils peuvent se présenter sous la forme d'une bande d'adhésif recouverte d'une pellicule de protection, permettant une adhésion directe contre la face interne 112 de la visière ou contre le front de l'utilisateur.

Ou bien celle d'une bande auto-agrippante coopérant avec une bande auto-agrippante complémentaire à fixer sur l'accessoire de l'utilisateur par exemple par un adhésif.

Les ailes (20 et 40) peuvent être amincies en leurs extrémités afin de pouvoir intégrer une fente (13) permettant d'y introduire un système de fixation complémentaire comme une sangle, une pince, une pièce additionnelle boulonnée...

Toutefois, le poids très faible du dispositif, de l'ordre de 50 grammes, limite les risques d'arrachement des moyens de fixation principaux même lors de la pratique de sports extrêmes. La présence de sangles est donc facultative.

Le boitier (10) est composé d'une partie supérieure bombée et d'un fond plat pour faciliter l'installation du dispositif sur le support de fixation.

Le boitier (10) contient dans chacune des ailes (20 et 40) respectivement la batterie et l'électronique embarquée (51) .

Le module central (30) intègre le dispositif de capture d'image et de vidéo grâce à une lentille (56), intégrée dans une rotule (32) permettant une inclinaison définie et limitée sur un axe vertical C ou horizontal B. Le système de rotation de la lentille (56) permet d'utiliser la caméra dans tous les sens, en pivotant celle-ci sur l'axe horizontal B en vue d'obtenir une image ou une vidéo à l'endroit. Le système d'inclinaison de la lentille (56) sur l'axe vertical B permet lui, de régler précisément l'angle de la prise de vue de l'image ou de la vidéo.

Le réglage d'inclinaison et de rotation de la prise de vue, est facilitée par la fonction webcam qui permet de visualiser le rendu vidéo en temps réel sur l'écran d'un périphérique externe grâce à un cordon relié à la prise vidéo (54) de la caméra boitier (10) .

Le réglage en position nulle est facilité grâce à une encoche (34) servant de repère sur la coque centrale (31) et à un repère haut (35) et bas (36) disposé sur la rotule (32).

La coque centrale (31) vient s'emboiter dans le caisson central (12) pour contenir la rotule (32). Un dispositif de serrage (33) permet d'immobiliser la rotule (32) et sa lentille (56) dans une position précise en vue d'obtenir des images ou des vidéos avec le bon angle de vue souhaité.

Le boitier (10) contient une petite face transparente (57) permettant de recevoir un signal radio ou infrarouge permettant de piloter les fonctions essentielles du dispositif.

Le boitier comporte un bouton (41) relié par une articulation à l'aile (40) qui actionne le contacteur de la carte électronique permettant de piloter les fonctions essentielles du dispositif. Ce bouton (41) est en surépaisseur par rapport au boîtier (40) permettant ainsi à l'utilisateur de le trouver facilement même si celui-ci est muni de gants.

Il peut autrement être prévu que le bouton se présente sous la forme d'une membrane qui actionne le contacteur de la carte électronique.

Ce bouton unique assure à la fois les fonctions de marche, pause et arrêt en fonction de temps différents d'application d'une pression par l'utilisateur.

Le boitier comporte également un emplacement pour un voyant (42) permettant à l'utilisateur de le visualiser sans gêner son champs de vision, en lui indiquant le statut du dispositif; allumé, éteint, acquisition vidéo en cours...

Le système électronique embarquée dispose d'un emplacement pour la carte mémoire (52) pour stocker les images, les vidéos et l'audio sur une carte mémoire miniature.

Il est possible de raccorder le dispositif à un autre périphérique ou ordinateur grâce à une prise (54), au format USB ou autre, en vue de recharger la batterie, de télécharger le contenu de la carte mémoire ou de contrôler sur un écran externe l'angle de vue du dispositif grâce à la fonction webcam.

Le volet coulissant (43) en position fermée permet de protéger l'électronique embarquée (51) et respecte le design originel du boîtier (10). Il permet également de réduire lors de l'acquisition audio les bruits liés à la vitesse en protégeant le dispositif de capture audio (53). Bien entendu, il pourra être prévu un autre mode d'articulation du volet vis à vis du reste de l'aile, par exemple, un volet pivotant autour d'un axe coïncidant avec le bord longitudinal de l'aile.

En position ouverte, celui-ci permet d'accéder facilement aux fonctions électroniques embarquées; carte mémoire (52), branchement (54), bouton reset (55).

Selon une variante non illustrée, le dispositif peut également être équipé d'une télécommande permettant de piloter les fonctions essentielles du dispositif.

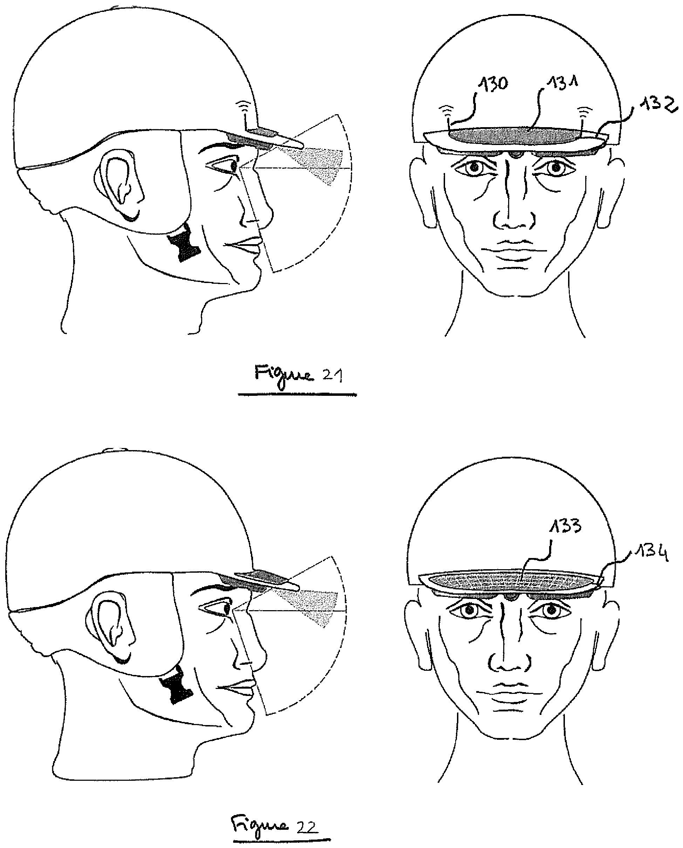

Selon une variante illustrée sur la figure 21, le dispositif peut également inclure un relais 131 monté sur la visière, à l'opposé du dispositif de capture d'image, et permettant de diffuser en temps réel par ondes radio 130 sur une fréquence longue portée, les images embarquées à un poste de réception tel qu'un ordinateur ou une tablette. Le relai étant connecté par exemple par un fil 132 au dispositif.

Selon une variante illustrée figure 22, le dispositif peut également inclure un chargeur solaire 133 en vue de prolonger l'autonomie de la batterie intégrée. L'accessoire de capteur solaire 133 est fixé sur le dessus de la visière et raccordé au dispositif par un fil 134 en vue de régénérer en continue le chargement de la batterie.

A titre d'exemple non limitatif, le boitier (10) aura des dimensions de l'ordre de 6,5 cm pour la largeur, de 16,5 cm pour la longueur et de 1,5 cm sur la hauteur.

Le dispositif selon l'invention est particulièrement destiné à être positionné sur des casques, des visières de protections, des masques, des bandeaux, des brides d'équitation ou des casquettes permettant de filmer au plus près de l'action et principalement des scènes sportives.

Il peut en outre être fixé par les moyens de fixation directement sur toute partie du corps d'un utilisateur, tel que son front, son cou, y compris à même la peau. On prévoit dans ce cas un adhésif dermatologiquement acceptable ou non allergène.

Il peut également être fixé sur la bride 126 d'un animal tel qu'un cheval, passant par exemple au dessus des yeux tel que représenté sur la figure 19. Ainsi, le terme « utilisateur » est à comprendre comme incluant à la fois les humains et les animaux. La possibilité de modifier la courbure du dispositif suivant un axe vertical C prend toute son importance pour le rendre adaptable à la forme de fronts d'utilisateurs de différents type. Une articulation de type flexible ou rotule autour de cet axe C est alors à préférer.

Le fait que le dispositif comprenne une articulation entre chaque aile et le module central lui permet d'épouser la forme bombée d'un accessoire ou du front d'un utilisateur, c'est à dire de longer la surface correspondante sur toute la longueur du dispositif, sans s'en écarter de plus de 10 mm par exemple. Le fait que cette articulation puisse s'effectuer autour d'axes différents (par exemple autour d'un axe parallèle à l'axe optique et autour d'un axe perpendiculaire à celui-ci) permet au dispositif de s'adapter à différentes formes de front, d'accessoire ou de parties de corps de l'utilisateur. Sa forme aplatie lorsqu'observé face à l'axe optique le rend discret et pratiquement invisible lorsque porté sous une visière.

## Revendications

1. Dispositif de capture d'images et/ou de vidéos embarqué miniature, comprenant :
- un module (30) renfermant un système de capture d'images et/ou de vidéos miniature définissant un axe optique (A) et
- au moins un boîtier allongé doté d'au moins une aile (20, 40) accueillant des équipements de fonctionnement du système de capture d'images et/ou de vidéos, tels qu'une batterie et/ou une électronique embarquée,
- des moyens de fixation à un accessoire porté sur la tête d'un utilisateur ou au front de l'utilisateur lui-même, le dispositif est **caractérise en ce qu'**il comprend:
- le module (30) et le boîtier (10) étant articulés de façon à pouvoir adopter une configuration incurvée incluse dans un plan perpendiculaire à l'axe optique du système de capture d'image et/ou de vidéo, et/ou incluse dans un plan contenant l'axe optique du système de capture d'image et/ou de vidéo de façon à pouvoir épouser la forme incurvée correspondante de l'accessoire ou du front de l'utilisateur, pour y être fixé dans la configuration incurvée par les moyens de fixation.

2. Dispositif selon la revendication 1, **caractérisé en ce que** l'aile est disposée d'un côté de l'axe optique du système optique.

3. Dispositif selon la revendication 1 ou 2, **caractérisé en ce que** le boitier (10) est composé de deux ailes (20, 40) articulées chacune vis à vis d'un bord latéral du module (30), les deux ailes étant disposées respectivement de part et d'autre de l'axe optique du système de capture d'images et/ou de vidéos.

4. Dispositif selon l'une des revendications précédentes, **caractérisé en ce que** l'articulation d'une aile vis à vis du module s'effectue par une portion flexible interposée entre le module et l'aile et solidarisée au module et à l'aile.

5. Dispositif selon l'une quelconque des revendications 1 à 3, **caractérisé en ce que** l'articulation d'une aile vis à vis du module s'effectue par une liaison mécanique type pivot ou rotule.

6. Dispositif selon la revendication 5, **caractérisé en ce que** les moyens de fixation sont disposés sur sa face inférieure et/ou sur sa face supérieure et/ou sur sa face arrière, de préférence sous la forme d'une bande auto-agrippante susceptible de coopérer avec une bande auto-agrippante complémentaire de l'accessoire de l'utilisateur, et/ou un adhésif à fixer sur l'accessoire ou directement sur la peau de l'utilisateur.

7. Dispositif selon l'une des revendications précédentes, **caractérisé en ce que** l'aile se présente sous la forme d'une coque fermée et renferme un microphone, la coque abritant le microphone des bruits parasites tels que ceux créés par le vent lorsque l'utilisateur se déplace à vitesse élevée.

8. Dispositif selon l'une des revendications précédentes, **caractérisé en ce que** le système de capture d'images et/ou de vidéos comprend une rotule orientable permettant une rotation d'une lentille du système de capture autour d'un axe horizontal et/ou autour d'un axe vertical.

9. Dispositif selon la revendication précédente, **caractérisé en ce qu'**il comprend des moyens d'immobilisation de la rotule dans une position particulière.

10. Dispositif selon l'une quelconque des revendications précédentes, **caractérisé en ce qu'**il comprend un unique bouton de commande du système de capture assurant à la fois les fonction de marche, pause et arrêt.

11. Dispositif selon l'une quelconque des revendications précédentes, **caractérisé en ce qu'**il comprend un voyant signalant l'état allumé ou éteint du système de capture, disposé sur la face inférieure de l'aile opposée au système de capture afin d'être visible par l'utilisateur sans nécessiter qu'il ôte le dispositif, tout en ne gênant pas outre mesure son champ de vision.

12. Accessoire avec caméra embarquée miniature destiné à être porté sur la tête d'un utilisateur, comprenant une partie formant un bandeau susceptible d'épouser la forme arrondie de la tête de l'utilisateur, **caractérisé en ce qu'**il comprend le dispositif selon l'une quelconque des revendications précédentes et des moyens de fixation entre le bandeau et le dispositif.

13. Accessoire selon la revendication précédente, **caractérisé en ce que** le dispositif est fixé par sa face arrière, sur la face avant du bandeau.

14. Accessoire selon la revendication 12 ou 13, comprenant une visière solidaire du bandeau, le dispositif étant fixé par sa face inférieure ou par sa face supérieure respectivement sur la paroi supérieure ou sur la paroi inférieure de la visière.

## Patentansprüche

1. Mitgeführte Miniaturvorrichtung zur Aufnahme von Bildern und/oder Videos, die folgendes umfasst:
- ein Modul (30), welches ein Miniatursystem zur Aufnahme von Bildern und/oder Videos enthält, in welchem eine optische Achse (A) definiert wird, und
- mindestens ein längliches Gehäuse, das mit mindestens einem Flügel (20, 40) versehen ist, der die Funktionselemente des Bild- und/oder Videoaufnahmesystems, zum Beispiel ein Akku und/oder eine mitgeführte Elektronik, enthält,
- Mittel zur Befestigung an einem Zubehörteil, das ein Benutzer am Kopf oder an der Stirn trägt.
Die Vorrichtung ist **dadurch gekennzeichnet, dass** sie folgendes umfasst:
- wobei das Modul (30) und das Gehäuse (10) so miteinander gelenkig verbunden sind, dass eine gebogene Konfiguration auf einer Ebene senkrecht zur optischen Achse des Bild- und/oder Videoaufnahmesystems und/oder auf einer Ebene, auf welcher die optische Achse des Bild- und/oder Videoaufnahmesystems liegt, angenommen werden kann, sodass es sich an die gebogene Form des Zubehörteils oder der Stirn des Benutzers anpassen und in der gebogenen Konfiguration über Befestigungsmittel befestigt werden kann.

2. Vorrichtung nach Anspruch 1, **dadurch gekennzeichnet, dass** der Flügel an einer Seite der optischen Achse des optischen Systems positioniert ist.

3. Vorrichtung nach Anspruch 1 oder 2, **dadurch gekennzeichnet, dass** das Gehäuse (10) aus zwei Flügeln (20, 40) besteht, die jeweils an einer seitlichen Kante des Moduls (30) gelenkig befestigt sind, wobei die beiden Flügel jeweils zu beiden Seiten der optischen Achse des Bild- und/oder Videoaufnahmesystems angeordnet sind.

4. Vorrichtung nach einem der vorhergehenden Ansprüche, **dadurch gekennzeichnet, dass** die gelenkige Verbindung eines Flügels am Modul über einen flexiblen Abschnitt erfolgt, der zwischen dem Modul und dem Flügel eingesetzt und mit dem Modul und dem Flügel fest verbunden ist

5. Vorrichtung nach einem der Ansprüche 1 bis 3, **dadurch gekennzeichnet, dass** die gelenkige Verbindung eines Flügels am Modul über eine mechanische Verbindung vom Typ Zapfen oder Kugelgelenk hergestellt wird.

6. Vorrichtung nach Anspruch 5, **dadurch gekennzeichnet, dass** die Befestigungsmittel an der Innenseite und/oder der Oberseite und/oder der Rückseite angeordnet sind, vorzugsweise in Form eines Klettbands, das mit einem ergänzenden Klettband des Zubehörteils des Benutzers zusammenwirken kann, und/oder eines Klebebands, das auf dem Zubehörteil oder direkt auf der Haut des Benutzers befestigt wird.

7. Vorrichtung nach einem der vorhergehenden Ansprüche, **dadurch gekennzeichnet, dass** der Flügel die Form einer geschlossenen Schale hat und ein Mikrofon umschließt, wobei die Schale das Mikrofon vor Störgeräuschen, wie sie zum Beispiel vom Wind erzeugt werden, schützt, wenn sich der Benutzer mit hoher Geschwindigkeit fortbewegt.

8. Vorrichtung nach einem der vorhergehenden Ansprüche, **dadurch gekennzeichnet, dass** das Bild- und/oder Videoaufnahmesystem ein ausrichtbares Kugelgelenk umfasst, dass die Drehung einer Linse des Aufnahmesystems um eine horizontale Achse und/oder eine vertikale Achse ermöglicht.

9. Vorrichtung nach dem vorhergehenden Anspruch, **dadurch gekennzeichnet, dass** sie Mittel zum Feststellen des Kugelgelenks in einer besonderen Position umfasst.

10. Vorrichtung nach einem der vorhergehenden Ansprüche, **dadurch gekennzeichnet, dass** sie einen einzigen Knopf zum Bedienen des Aufnahmesystems umfasst, welcher die Funktionen des Einschaltens, der Pause und des Ausschaltens übernimmt.

11. Vorrichtung nach einem der vorhergehenden Ansprüche, **dadurch gekennzeichnet, dass** sie eine Kontrollleuchte umfasst, welche den eingeschalteten oder ausgeschalteten Status des Aufnahmesystems anzeigt, und sich an der Innenseite des Flügels gegenüber dem Aufnahmesystem befindet, um für den Benutzer sichtbar zu sein, ohne dass er die Vorrichtung abnehmen muss, wobei das Gesichtsfeld nicht über die Maßen beeinträchtigt wird.

12. Zubehörteil mit mitgeführter Miniaturkamera, das ein Benutzer am Kopf trägt, wobei ein Teil ein Band umfasst, das sich an die abgerundete Kopfform des Benutzers anpassen kann, **dadurch gekennzeichnet, dass** es die Vorrichtung nach einem der vorhergehenden Ansprüche und Befestigungsmittel zwischen dem Band und der Vorrichtung enthält.

13. Zubehörteil nach dem vorhergehenden Anspruch, **dadurch gekennzeichnet, dass** die Vorrichtung an ihrer Rückseite mit der Vorderseite des Bandes befestigt ist.

14. Zubehörteil nach Anspruch 12 oder 13, welches einen mit dem Band verbundenen Sichtschutz aufweist, wobei die Vorrichtung an der Innenseite oder der Oberseite mit der oberen Wand oder der unteren Wand des Gesichtsschutzes befestigt ist.

## Claims

1. An on-board miniature device for capturing images and/or videos, comprising:
- a module (30) containing a miniature system for capturing images and/or video defining an optical axis (A) and
- at least one elongate housing provided with at least one wing (20, 40) accommodating equipment operating the system for capturing images and/or videos, such as an on-board battery and/or electronics,
- means for attachment to a fixture carried on the user's head or on the user's forehead proper,
with the device being **characterized in that** it comprises:
- the module (30 and the housing (10) being so hinged as to be able to take a curved configuration included in a plane perpendicular to the optical axis of the image and/or video capture system, and/or included in a plane containing the optical axis of the system for capturing images and/or videos, so as to be able to match the corresponding curved shape of the fixture or of the user's forehead, in order to be attached thereto in the curved configuration, using the attaching means.

2. A device according to claim 1, **characterized in that** the wing is positioned on one side of the optical axis of the optical system.

3. A device according to claim 1 or 2, **characterized in that** the housing (10) comprises two wings (20, 40) each articulated with respect to a side edge of the module (30), with the two wings being positioned on either side of the optical axis of the system for capturing images and/or videos respectively.

4. A device according to one of the preceding claims, **characterized in that** a wing is hinged relative to the module by a flexible portion interposed between the module and the wing and secured to the module and to the wing.

5. A device according to any one of claims 1 to 3, **characterized in that** a wing is hinged relative to the module by a mechanical linkage of the pivot or ball joint type.

6. A device according to claim 5, **characterized in that** the attaching means are positioned on the lower face and/or on the upper face and/or on the rear face thereof, preferably in the form of a hook-and-loop strip liable to cooperate with a matching hook-and-loop strip on the user's fixture and/or an adhesive to be attached to the fixture or directly on the user's skin.

7. A device according to one of the preceding claims, **characterized in that** the wing is in the shape of a closed shell and contains a microphone, with the shell protecting the microphone against spurious noise such as noise created by the wind when the user moves at high speed.

8. A device according to one of the preceding claims, **characterized in that** the system for capturing images and/or videos includes a swivel ball joint allowing a lens of the capture system to rotate around a horizontal axis and/or about a vertical axis.

9. A device according to the preceding claim, **characterized in that** it comprises means for immobilizing the ball joint in a particular position.

10. A device according to any one of the preceding claims, **characterized in that** it comprises a single switch controlling the capture system which provides for all the start, pause and stop functions.

11. A device according to any one of the preceding claims, **characterized in that** it comprises a warning light signaling the on or off condition of the capture system positioned on the lower face of the wing opposite the capture system, so as to be visible to the user, without requiring him/her to take the device in hand, while not unduly impairing his/her field of view.

12. A fixture with a miniature on-board camera intended to be carried on a user's head, comprising a part forming a headband capable of adapting to the rounded shape of the user's head, **characterized in that** it comprises the device according to any one of the preceding claims and means for attaching the headband and the device.

13. A fixture according to the preceding claim, **characterized in that** the device is attached on the front face of the headband by its rear face.

14. A fixture according to claim 12 or 13, comprising a peak integral with the headband, with the device being attached by its lower face or by its upper face respectively on the upper side or the lower side of the peak.
